# EUROPÄISCHE PATENTSCHRIFT

(11) **EP 3 907 330 B1**
(45) Veröffentlichungstag und Bekanntmachung des Hinweises auf die Patenterteilung: **17.01.2024**
(21) Anmeldenummer: 20173750.9
(22) Anmeldetag: 08.05.2020
(51) Int. Cl.: E01F 7/04

(54) **STEINSCHLAGVERBAUUNG**
ROCK FALL OBSTRUCTION
PROTECTION CONTRE LA CHUTE DE PIERRES

(43) Veröffentlichungstag der Anmeldung: 10.11.2021
(73) Patentinhaber: Trumer Schutzbauten Ges.m.b.H, 5110 Oberndorf (AT)
(72) Erfinder: Bichler, Ahren, Sechelt, British Columbia V0N 3A2 (CA); Stelzer, Gernot, 5431 Kuchl (AT)
(74) Vertreter: Hoefer & Partner Patentanwälte mbB

(56) Entgegenhaltungen:
- EP-B1- 2 489 785
- CN-U- 201 908 312
- JP-U- S56 138 909

## Beschreibung

Die Erfindung betrifft eine Steinschlagverbauung.

Eine derartige Steinschlagverbauung ist aus der EP 2 489 785 B1 bekannt. Der Vorteil dieser Steinschlagverbauung ist darin zu sehen, dass einerseits das Aufnehmen hoher Energien im Netz ermöglicht wird und es andererseits ebenfalls möglich ist, das aufgefangene Gut aus dem Stützenbereich in leichter zugängliche unterhalb der Stützen liegende Bereiche zu befördern.

Die zum Aufnehmen der hohen Energien erforderlichen Bremselemente sind bei der gattungsgemäßen Steinschlagverbauung überwiegend im Bereich der Stützen angeordnet. Dies macht Wartungs- und Reparaturarbeiten aufwändiger, insbesondere wenn die gattungsgemäße Steinschlagverbauung in schwer zugänglichem Gelände installiert ist.

JP S 56 138909 U zeigt eine Steinschlagverbauung mit einem Netz, durch das Mittelseile verlaufen.

CN 201 908 312 U zeigt ebenfalls eine Steinschlagverbauung mit einem Netz, durch das entsprechende Mittelseile verlaufen.

Es ist daher Aufgabe der vorliegenden Erfindung, eine Steinschlagverbauung der im Oberbegriff des Anspruches 1 angegebenen Art zu schaffen, die ebenfalls zum Aufnehmen hoher Energien im Netz geeignet ist und dabei gleichzeitig Wartungs- und Reparaturarbeiten, insbesondere an Bremselementen, erleichtert.

Die Lösung dieser Aufgabe erfolgt durch die Merkmale des Anspruches 1.

Die erfindungsgemäße Steinschlagverbauung zur Installation zwischen einer Bergseite und einer Talseite eines Berghanges weist neben zumindestens zwei Führungseinrichtungen, einem Netz mit einem oberen und einem unteren Rand und einem oberen Tragseil, das den oberen Rand des Netzes an den Führungseinrichtungen führt, zumindestens ein Mittelseil auf. Dieses Mittelseil erstreckt sich von einem oberen am oberen Tragseil fixierten Endpunkt bis zu einem unteren, am Berghang fixierbaren Endpunkt.

Vorteilhafterweise kann die erfindungsgemäße Steinschlagverbauung mit lediglich einem oberen Tragseil versehen sein. Alternativ ist es jedoch auch möglich, mehrere derartige obere Tragseile vorzusehen, insbesondere zu bündeln, falls dies aufgrund der zu erwartenden Lasten erforderlich ist. Ferner weist die erfindungsgemäße Steinschlagverbauung keine horizontalen Mittelseile auf, die aufzufangende Blöcke möglicherweise im oberen Bereich zurückhalten würden bzw. den Wartungs- und Reparaturaufwand wieder erhöhen würden, da auch derartige horizontale Mittelseile mit Bremselementen versehen werden müssen.

Im Gegensatz hierzu ergibt sich aufgrund der Anordnung des Mittelseils der erfindungsgemäßen Steinschlagverbauung der Vorteil, dass dieses den aufgefangenen Stein bzw. Felsblock nach unten leiten kann.

Als eine mögliche Alternative kann vorgesehen sein, dass das zumindestens eine Mittelseil auch diagonal bzw. schräg durch das Trefferfeld im Bereich des Netzes geführt ist. Hierzu kann das Mittelseil von einem oberen, am oberen Tragseil fixierten Endpunkt bis zu einem unteren, am Berghang fixierten Endpunkt angeordnet werden. Auch bei dieser Ausführungsform kann das zumindest eine Mittelseil mit einem am Berghang fixierbaren Bremselement versehen sein, das benachbart zum unteren Rand des Netzes angeordnet ist.

Die Verbindung des Mittelseils mit dem Netz kann durchgeschlauft oder auch luftseitig oben anliegend oder geländeseitig anliegend ausgebildet sein. Bevorzugterweise wird das Mittelseil in diesem Falle über Verbindungselemente, wie beispielsweise Schäkel oder Nähseile mit dem Netz verbunden werden.

Das zumindest eine Mittelseil ist mit einem am Berghang fixierbaren Bremselement versehen, das benachbart zum unteren Rand des Netzes angeordnet ist.

Die Unteransprüche haben vorteilhafte Weiterbildungen der Erfindung zum Inhalt.

Dadurch wird vorteilhafterweise erreicht, dass nicht nur das aufgefangene Gut aus dem Stützenbereich in leichter zugängliche unterhalb der Stützen liegende Bereiche befördert werden kann, sondern dass auch das Bremselement in diesen leichter zugänglichen Bereichen angeordnet ist, was insbesondere nach einem Einschlag nötige Wartungs- und Reparaturarbeiten erheblich erleichtert.

Bei einer weiteren besonders bevorzugten Ausführungsform weist die erfindungsgemäße Steinschlagverbauung Zwei Mittelseile auf, die jeweils mit einem zugehörigen Bremselement versehen sein können, die wiederum benachbart zum unteren Rand des Netzes angeordnet sind.

Zur Fixierung des zumindest einen Mittelseils kann ein Anker vorgesehen sein, der am Berghang fixierbar ist.

Sind mehrere Mittelseile, insbesondere zwei Mittelseile vorgesehen, kann jedes dieser Mittelseile mit einem zugehörigen Anker am Berghang fixiert werden.

Weitere Einzelheiten, Merkmale und Vorteile der Erfindung ergeben sich aus nachfolgender Beschreibung von Ausführungsbeispielen anhand der Zeichnung. Darin zeigt:
- Fig. 1: eine schematisch leicht vereinfachte Seitenansicht einer erfindungsgemäßen Steinschlagverbauung,
- Fig. 2: eine Draufsicht bzw. einen Grundriss auf die Steinschlagverbauung gemäß Fig. 1,
- Fig. 3: eine der Fig. 2 entsprechende Darstellung einer ersten Variante der erfindungsgemäßen Steinschlagverbauung, und
- Fig. 4: eine den Figuren 2 und 3 entsprechende Darstellung einer zweiten Variante der erfindungsgemäßen Steinschlagverbauung.

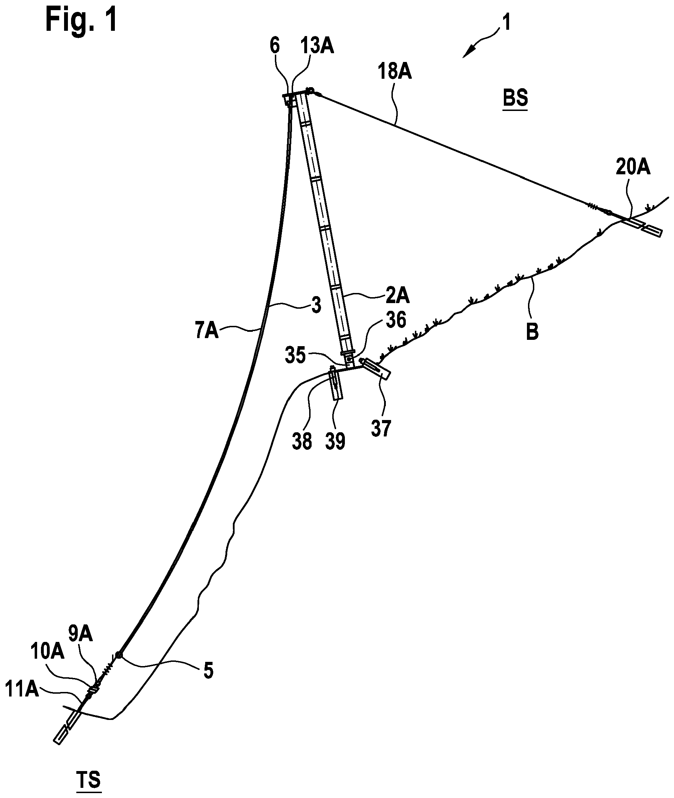

Fig. 1 zeigt eine Steinschlagverbauung 1 zur Installation zwischen einer Bergseite BS und einer Talseite TS eines Berghanges B.

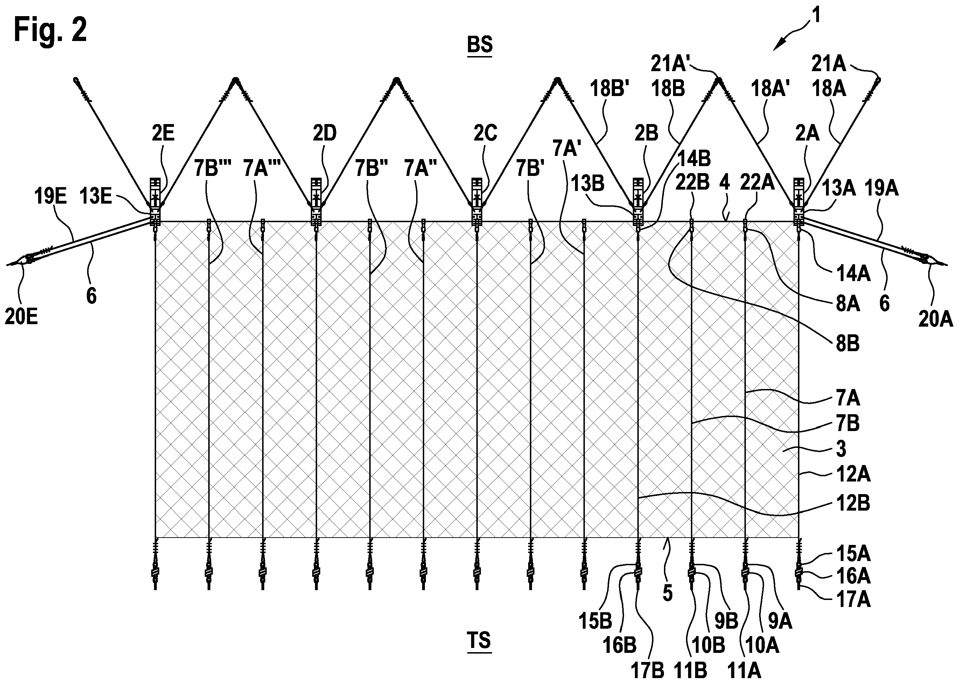

Diese Steinschlagverbauung 1 weist zumindestens zwei Führungseinrichtungen auf, von denen aufgrund der in Fig. 1 gewählten Darstellung nur eine Führungseinrichtung 2A sichtbar ist. Aus der Darstellung der Fig. 2 ergibt sich jedoch, dass bei dem in dieser Figur dargestellten Beispielsfall insgesamt fünf derartige Führungseinrichtungen in Form von Stützen 2A, 2B, 2C, 2D und 2E vorgesehen sein können. Um ein Netz 3, das eine weitere Komponente der erfindungsgemäßen Steinschlagverbauung 1 ist, aufspannen zu können, müssen jedoch zumindestens zwei Führungseinrichtungen bzw. Stützen 2A und 2B vorgesehen sein. Natürlich ist es möglich, dass auch mehr als fünf derartige Führungseinrichtungen bzw. Stützen vorgesehen sein können, je nachdem, wie groß das durch die Steinschlagverbauung zu schützende Gebiet ist.

Alternativ zu derartigen Stützen ist es möglich, das Netz 3 beispielsweise in einer Geländerunse, insbesondere in Form eines Bach- oder Flussbettes aufzuspannen, wobei in diesem Falle keine Stützen erforderlich sind, da das Netz 3 an den die Geländerunse (rinnenförmige Geländeform) begrenzenden Rändern fixiert werden kann.

Eine weitere Alternative für Stützen könnten zwei Wände, insbesondere in Form von Stahlbetonwänden oder ähnlichem sein, die beispielsweise an einer Bergstraße aus anderen Zwecken ohnehin vorgesehen sind.

Wie sich aus einer Zusammenschau der Figuren 1 und 2 ergibt, weist das Netz 3 einen oberen Rand 4 und einen unteren Rand 5 auf, der je nach Größe des Netzes 3 in einem entsprechenden Abstand zum oberen Rand 4 verläuft.

Die erfindungsgemäße Steinschlagverbauung 1 weist ferner ein oberes Tragseil 6 auf, das den oberen Rand 4 an den zumindestens zwei Führungseinrichtungen, insbesondere den gemäß Fig. 2 vorgesehenen fünf Führungseinrichtungen 2A bis 2E führt.

Erfindungsgemäß ist ferner zumindestens ein Mittelseil 7A vorgesehen, das sich von einem oberen am oberen Tragseil 6 fixierten Endpunkt 8A bis zu einem unteren, am Berghang B fixierbaren Endpunkt 9A erstreckt.

Fig. 1 verdeutlicht ferner, dass die erfindungsgemäße Steinschlagverbauung 1 ferner zumindestens ein Bremselement 10A aufweist, das benachbart zum unteren Rand 5 des Netzes 3 angeordnet ist und am Berghang beispielsweise mittels eines Ankers 11A fixierbar ist, wobei Fig. 1 den Einbauzustand der erfindungsgemäßen Steinschlagverbauung 1 zeigt, in der die Fixierung durch den Anker 11A am Berghang B talseitig vorgenommen ist.

Eine Zusammenschau der Figuren 1 und 2 verdeutlicht ferner, dass die Stütze 2A mit Hilfe zweier bergseitiger Rückhalteseile 18A, 18A' über zwei bergseitige Anker 21A, 21A' am Berghang B gesichert ist.

Wie Fig. 1 ferner zeigt, weist die Stütze 2A einen Stützenkopf 13A auf, durch den das obere Tragseil 6 geführt ist.

Am unteren Ende ist die Stütze 2A mit einem Bolzen 36 mit Federstecker und einer Grundplatte 35 versehen. Die Grundplatte 35 ist mit Hilfe eines Zugpfahles 37, eines Mikropfahlrohres 38 und eines Druckpfahls 39 am Berghang B fixiert.

Wie zuvor anhand der Fig. 2 erläutert wurde, sind zum Aufspannen des Netzes 3 zumindestens zwei Führungseinrichtungen erforderlich, die bei der in Fig. 2 dargestellten besonders bevorzugten Ausführungsform als Stützen 2A und 2B ausgebildet sind. Wie erläutert sind im Beispielsfalle jedoch fünf derartige Stützen 2A bis 2E vorgesehen, die jeweils beabstandet zueinander angeordnet sind. Der Aufbau, die Anordnung und die Sicherung bzw. der Einbau dieser Stützen 2A bis 2E ist bei jeder der dargestellten Stützen derselbe, so dass nachfolgend repräsentativ für sämtliche Stützen 2A bis 2E auf die Stützen 2A und 2B Bezug genommen wird.

Die Stütze 2A ist mit einem Tragseil 12A verbunden. Dieses Tragseil weist einen oberen Endpunkt 14A auf, der an der Stütze 2A fixiert ist. Das Tragseil 12A weist ferner einen unteren Endpunkt 15A auf, der mit einem Bremselement 16A verbunden ist und der über einen Anker 17A talseitig am Berghang B fixierbar ist.

Eine entsprechende Anordnung weist die Stütze 2B auf, die ebenfalls über ein Tragseil 12B mit oberem Endpunkt 14B und unterem Endpunkt 15B sowie Bremselement 16B und Anker 17B am Berghang B fixiert werden kann.

Zwischen den Tragseilen 12A und 12B verlaufen im Beispielsfalle zwei Mittelseile 7A und 7B, die deswegen als Mittelseile bezeichnet werden, da sie in einem mittleren Bereich zwischen den Tragseilen 12A und 12B angeordnet sind.

Die beiden Mittelseile 7A und 7B weisen obere Endpunkte 8A bzw. 8B und untere Endpunkte 9A und 9B auf. Die oberen Endpunkte 8A und 8B sind über Seilanschlüsse 22A bzw. 22B am oberen Tragseil 6 angebracht. Die Seilanschlüsse 22A und 22B können beispielsweise als T-förmige Anschlüsse ausgebildet sein, die bevorzugterweise bewegliche Bauteile darstellen.

Die Mittelseile 7A und 7B weisen ferner benachbart zum unteren Rand 5 des Netzes 3 angeordnete Bremselemente 10A bzw. 10B auf, an denen die unteren Endpunkte 9A bzw. 9 B fixiert sind. Die Fixierung der Bremselemente und damit die Fixierung der unteren Endpunkte 9A und 9B der Mittelseile 7A und 7B erfolgt durch zugehörige Anker 11A und 11B.

Somit ergibt sich, dass sämtliche Bremselemente 10A, 10B der Mittelseile 7A, 7B und 16A sowie 16B der Tragseile 12A bzw. 12B benachbart zum unteren Rand 5 des Netzes 3 angeordnet sind, wobei der untere Rand 5, wie Fig. 1 verdeutlicht, einem leicht zugänglichen Bereich des Berghangs B zugeordnet ist, so dass sowohl durch die Mittelseile 7A und 7B in diesen leicht zugänglichen Bereich beförderte im Netz 3 eingeschlagene Steine bzw. Felsblöcke leicht und ungefährlich abtransportiert werden können als auch Wartungsarbeiten, wie insbesondere Reparaturarbeiten an den Bremselementen ebenfalls auf leichte und sichere Art und Weise durchgeführt werden können.

Fig. 2 verdeutlicht ferner, dass das obere Tragseil 6 jeweils seitlich der beiden äußersten Stützen 2A und 2E über Seitenanker 20A und 20E am Berghang B fixiert werden kann. Ferner ist im Bereich dieser äußersten Stützen 2A und 2E jeweils eine Seitenabspannung 19A und 19E vorgesehen. Hierbei sind sowohl die Enden des oberen Tragseils 6 als auch die Seitenabspannungen 19A und 19E mittels Seitenankern 20A und 20E am Berghang B fixierbar.

Sollte es aufgrund besonders hoher zu erwartender Energien erforderlich sein, können im Bereich dieser Seitenanker 20A und 20E ebenfalls Bremselemente vorgesehen sein.

Die Seilanschlüsse 22A und 22B können, wie zuvor erläutert, entweder entlang der Tragseil-Achse des oberen Tragseils 6 verschieblich oder auch fix ausgebildet sein.

Wie ebenfalls zuvor erläutert wurde, weist die in Fig. 2 dargestellte besonders bevorzugte Ausführungsform insgesamt fünf Stützen 2A bis 2E auf.

Ferner sind zwischen den den Stützen 2B und 2C zugeordneten Tragseilen Mittelseile 7A', 7B', zwischen den den Stützen 2C und 2D zugeordneten Tragseilen Mittelseile 7A" und 7B" sowie zwischen den den Stützen 2D und 2E zugeordneten Tragseilen Mittelseile 7A‴ und 7B‴ vorgesehen. Bezüglich deren Anordnung, Erstreckung und Fixierung kann auf die voranstehende Beschreibung der Mittelseile 7A und 7B Bezug genommen werden, da diesbezüglich sowohl die Stützen 2A bis 2E als auch die jeweiligen Mittelseile identisch ausgebildet, angeordnet und fixiert sind.

Dies trifft ebenso auf die bergseitigen Rückhalteseile zu, die anhand der Rückhalteseile 18A, 18A' und 18B für die Stützen 2A und 2B beispielhaft für sämtliche Stützen 2A bis 2E bereits erläutert wurden.

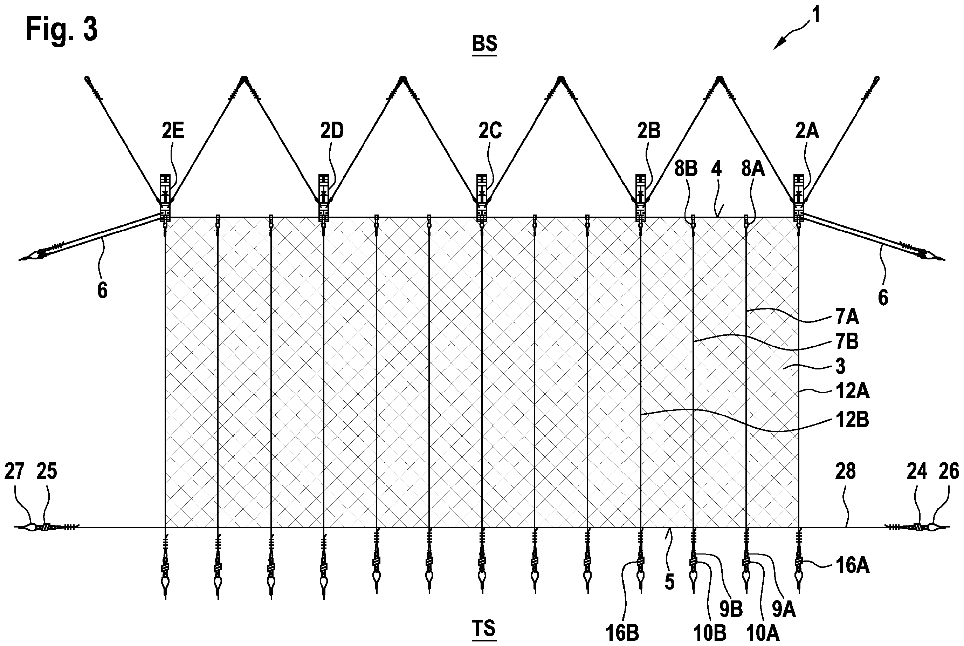

Die Ausführungsform der erfindungsgemäßen Steinschlagverbauung 1 gemäß Fig. 3 unterscheidet sich von derjenigen der Fig. 2 nur durch die Anordnung eines unteren Netzrandseiles 28, durch das der untere Rand 5 des Netzes 3 geführt wird. Dieses untere Netzrandseil 28 erstreckt sich durch den gesamten unteren Rand 5 und ist zu beiden Seiten des Netzes 3 über Bremselemente 24 bzw. 25 und Anker 26 bzw. 27 am Berghang B gesichert und aufgespannt. Das untere Netzrandseil 28 ist wie das obere Tragseil 6 sowie die Tragseile der Stützen 2A bis 2E sowie die Mittelseile vorzugsweise durch das Netz 3 durchgeschlauft bzw. in das Netz eingefädelt.

Ansonsten kann bezüglich aller anderen Komponenten der Ausführungsform der Steinschlagverbauung 1 gemäß Fig. 3 auf die Erläuterungen zu Fig. 2 verwiesen werden.

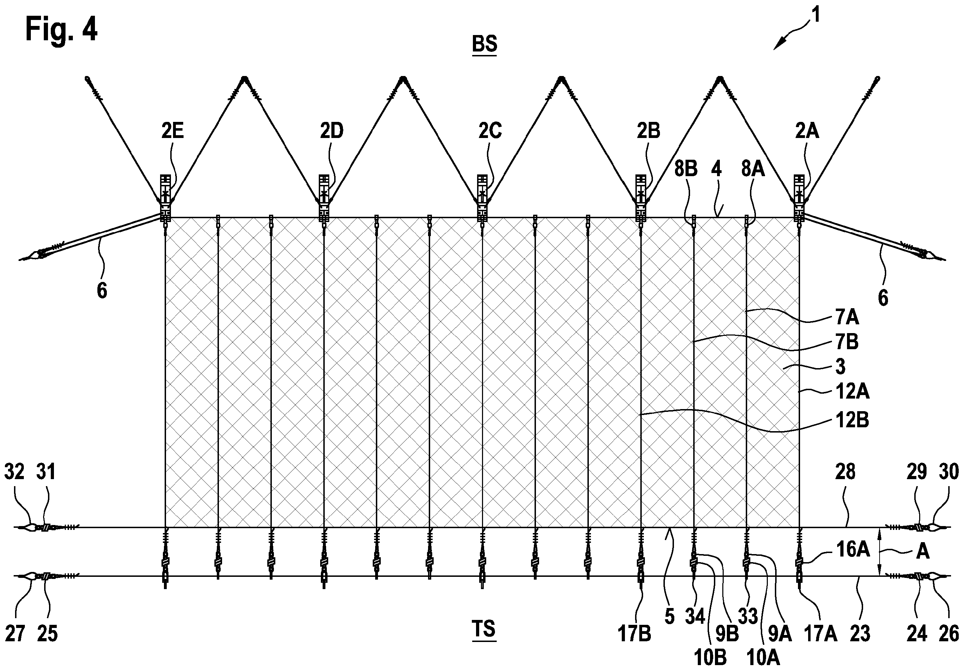

Dies trifft ebenso auf die Ausführungsform der Steinschlagverbauung 1 gemäß Fig. 4 zu, bei der, wie bei der Ausführungsform gemäß Fig. 3, der untere Rand 5 des Netzes 3 über ein Netzrandseil 28 geführt ist, das beidseitig des Netzes 3 über Bremselemente 29 und 31 sowie Anker 30 und 32 am Berghang B fixierbar ist. Das untere Tragseil 23 dieser Ausführungsform ist in einem Abstand A zum Netzrandseil 28 angeordnet und über Bremselemente 24 und 25 sowie Anker 26 und 27 beidseitig am Berghang B fixiert. Wie Fig. 4 verdeutlicht ergibt sich dadurch der Vorteil, dass nur die Tragseile 12A und 12B über Anker 17A und 17B am Berghang B fixiert werden müssen, während die Mittelseile 7A und 7B über Seilführungen 33 und 34 am unteren Tragseil 23 fixiert werden können. Bevorzugterweise kann diese Fixierung entlang der Achse des unteren Tragseils 23 beweglich ausgebildet sein. Hierbei ist es auch möglich, dass eine Mehrzahl derartiger Tragseile, zum Beispiel als Bündel zusammengefasst, vorgesehen ist.

Ferner ergibt sich der Vorteil, dass sich die Bremselemente der Tragseile 12A und 12B sowie der Mittelseile 7A und 7B in dem durch den Abstand A geschaffenen Bereich problemlos ausdehnen können, wenn dies durch den Einschlag eines oder mehrerer Felsbrocken in das Netz 3 nötig ist.

Wie gesagt, kann ansonsten hinsichtlich des Aufbaus der Anordnung und der Fixierung der Komponenten der Steinschlagverbauung 1 gemäß Fig. 4 auf die Beschreibung der vorangehenden Ausführungsbeispiele Bezug genommen werden.

Neben der voranstehenden schriftlichen Offenbarung der Erfindung wird hiermit explizit auf die zeichnerische Darstellung der Erfindung in den Figuren 1 bis 4 Bezug genommen.

### Bezugszeichenliste

1 Steinschlagverbauung
2A bis 2E Führungseinrichtungen / Stützen
3 Netz
4 oberer Rand
5 unterer Rand
6 oberes Tragseil
7A, 7B Mittelseile
8A, 9A Endpunkte
10A, 10B, 16A, 16B, 24, 25, 29, 31 Bremselemente
11A, 11B, 17A, 17B, 20A, 20E, 26, 27, 30, 32 Anker
13A, 13B Stützenköpfe
18A, 18A', 18B bergseitige Rückhalteseile
19A, 19B Seilabspannung
21A, 21A' Anker der bergseitigen Rückhalteseile
22A, 22B Seilanschlüsse
28 Netzrandseil
33, 34 Seilführungselemente
35 Grundplatte
36 Bolzen mit Federstecker
37 Zugpfahl
38 Mikropfahlroher
39 Druckpfahl
A Abstand
B Berghang
BS Bergseite
TS Talseite

## Patentansprüche

1. Steinschlagverbauung (1) zur Installation zwischen einer Bergseite (BS) und einer Talseite (TS) eines Berghanges (B)
- mit zumindestens zwei Führungseinrichtungen (2A, 2B) für ein Netz (3), das einen oberen Rand (4) und einen unteren Rand (5) aufweist, und
- mit einem oberen Tragseil (6), das den oberen Rand (4) des Netzes (3) an den Führungseinrichtungen (2A, 2B) führt,
- wobei zumindestens ein Mittelseil (7A) vorgesehen ist, das sich von einem oberen, am oberen Tragseil (6) fixierten Endpunkt (8A) bis zu einem unteren, am Berghang (B) fixierbaren Endpunkt (9A) erstreckt, **dadurch gekennzeichnet,**
- **dass** das zumindestens eine Mittelseil (7A) mit einem am Berghang (B) fixierbaren Bremselement (10A) versehen ist, das benachbart zum unteren Rand (5) des Netzes (3) angeordnet ist.

2. Steinschlagverbauung nach Anspruch 1, **dadurch gekennzeichnet, dass** zwei Mittelseile (7A, 7B) vorgesehen sind, die jeweils mit einem zugehörigen Bremselement (10A bzw. 10B) versehen sind, das benachbart zum unteren Rand (5) des Netzes (3) angeordnet ist.

3. Steinschlagverbauung nach einem der Ansprüche 1 oder 2, **dadurch gekennzeichnet, dass** die zumindestens zwei Führungseinrichtungen (2A, 2B) als benachbart zueinander angeordnete Stützen ausgebildet sind.

4. Steinschlagverbauung nach einem der Ansprüche 1 bis 3, **dadurch gekennzeichnet, dass** an einem Fixierungspunkt (13A, 13B) der jeweils zugeordneten Führungseinrichtung (2A, 2B) ein oberer Endpunkt (14A, 14B) eines zugehörigen Tragseils (12A, 12B) fixiert ist, das sich von dem oberen Endpunkt (14A, 14B) bis zu einem unteren am Berghang (B) fixierbaren Endpunkt (15A, 15B) erstreckt und dass zugehörige Bremselemente (16A, 16B) vorgesehen sind, die jeweils benachbart zum unteren Rand (5) des Netzes (3) angeordnet sind.

5. Steinschlagverbauung nach einem der Ansprüche 1 bis 4, **dadurch gekennzeichnet, dass** die Führungseinrichtungen (2A, 2B) durch an den jeweiligen Fixierungspunkten (13A, 13B) angreifende bergseitige Rückhalteseile (18A, 18A'; 18B, 18B') am Berghang (B) fixierbar sind.

6. Steinschlagverbauung nach einem der Ansprüche 1 bis 5, **dadurch gekennzeichnet, dass** die äußersten Führungseinrichtungen (2A, 2E) des Netzes (3) durch eine am jeweiligen Fixierungspunkt (13A, 13E) angreifende Seilabspannung (19A, 19E) am Berghang (B) fixierbar sind.

7. Steinschlagverbauung nach einem der Ansprüche 1 bis 6, **dadurch gekennzeichnet, dass** der obere Endpunkt (8A, 8B) der Mittelseile (7A, 7B) über einen Seilanschluss (22A bzw. 22B) am oberen Tragseil (6) angebracht ist.

8. Steinschlagverbauung nach Anspruch 7, **dadurch gekennzeichnet, dass** die Seilanschlüsse (22A, 22B) als T-förmige Anschlüsse ausgebildet sind.

9. Steinschlagverbauung nach Anspruch 7 oder 8, **dadurch gekennzeichnet, dass** die Seilanschlüsse (22A, 22B) als bewegliche Bauteile ausgebildet sind.

10. Steinschlagverbauung nach einem der Ansprüche 1 bis 9, **dadurch gekennzeichnet, dass** der untere Rand (5) des Netzes (3) durch ein unteres Netzrandseil (28) geführt ist.

11. Steinschlagverbauung nach Anspruch 10, **dadurch gekennzeichnet, dass** das untere Netzrandseil (28) im Bereich des Netzes (3) zumindestens annähernd parallel zum oberen Tragseil (6) verläuft.

12. Steinschlagverbauung nach Anspruch 10 oder 11, **dadurch gekennzeichnet, dass** das untere Netzrandseil (28) über zumindest ein Bremselement (24, 25) und an jedem Seilende über einen zugeordneten Seitenanker (26, 27) am Berghang (B) fixierbar ist.

13. Steinschlagverbauung nach einem der Ansprüche 10 bis 12, **dadurch gekennzeichnet, dass** ein unteres Tragseil (23) über einen Abstand (A) beabstandet zum Netzrandseil (28) verläuft und dass das bzw. die Mittelseile (7A, 7B) über Seilführungselemente (33, 34) am unteren Tragseil (23) geführt sind.

14. Steinschlagverbauung nach einem der Ansprüche 1 bis 3, **dadurch gekennzeichnet, dass** zur Fixierung des Mittelseils (7A) bzw. der Mittelseile (7A, 7B) am Berghang (B) jeweils ein Anker (11A, 11B) vorgesehen ist.

## Claims

1. Rockfall barrier (1) for installation between an uphill side (BS) and a downhill side (TS) of a hill slope (B)
- with at least two guide devices (2A, 2B) for a net (3), which comprises an upper edge (4) and a lower edge (5), and
- with an upper load-bearing rope (6), which guides the upper edge (4) at the guide devices (2A, 2B),
- wherein at least one middle rope (7A) is provided, which extends from an upper end point (8A) fixed at the upper load-bearing rope (6) to a lower end point (9A) fixable to the hill slope (B), **characterized in**
- **that** the at least one middle rope (7A) is provided with a braking element (10A) fixable to the hill slope (B) and arranged adjacent to the lower edge (5) of the net (3).

2. Rockfall barrier according to claim 1, **characterized in that** two middle ropes (7A, 7B) are provided, each of which is provided with an associated braking element (10A or 10B), which is arranged adjacent to the lower edge (5) of the net (3).

3. Rockfall barrier according to claim 1 or 2, **characterized in that** the at least two guide devices (2A, 2B) are formed as supports arranged adjacent to each other.

4. Rockfall barrier according to any of claims 1 to 3, **characterized in that** an upper end point (14A, 14B) of an associated load-bearing rope (12A, 12B) is fixed at a fixing point (13A, 13B) of the respectively associated guide device (2A, 2B), the load-bearing rope extends from the upper end point (14A, 14B) to a lower end point (15A, 15B) fixable at the hill slope (B), and **characterized in that** associated braking elements (16A, 16B) are provided, which are respectively arranged adjacent to the lower edge (5) of the net (3).

5. Rockfall barrier according to any of claims 1 to 4, **characterized in that** the guide devices (2A, 2B) is fixable at the hill slope (B) via hill side restraining ropes (18A, 18A'; 18B, 18B') engaging at the respective fixing points (13A, 13B).

6. Rockfall barrier according to any of claims 1 to 5, **characterized in that** the outermost guide devices (2A, 2E) of the net (3) are fixable at the hill slope (B) via a rope bracing (19A, 19E) engaging the respective fixing point (13A, 13E).

7. Rockfall barrier according to any of claims 1 to 6, **characterized in that** the upper end point (8A, 8B) of the middle ropes (7A, 7B) is attached to the upper load-bearing rope (6) via a rope connection (22A or 22B).

8. Rockfall barrier according to claim 7, **characterized in that** the rope connections (22A, 22B) are formed as T-shaped connections.

9. Rockfall barrier according to any of claims 7 or 8, **characterized in that** the rope connections (22A, 22B) are formed as movable components.

10. Rockfall barrier according to any of claims 1 to 9, **characterized in that** the lower edge (5) of the net (3) is guided via a lower net edge rope (28).

11. Rockfall barrier according to claim 10, **characterized in that** the lower net edge rope (28) extends at least approximately parallel to the upper load-bearing rope (6) in the region of the net (3).

12. Rockfall barrier according to claim 10 or 11, **characterized in that** the lower net edge rope (28) is fixable at the hill slope (B) via at least one braking element (24, 25) and at each rope end via an associated side anchor (26, 27).

13. Rockfall barrier according to any of claims 10 to 12, **characterized in that** a lower load-bearing rope (23) extends at a distance (A) from the net edge rope (28) and that the middle rope or ropes (7A, 7B) is/are guided at the lower load-bearing rope (23) via rope guide elements (33, 34).

14. Rockfall barrier according to any of claims 1 to 3, **characterized in that** an anchor (11A, 11B) is provided respectively for fixing the middle rope (7A) or the middle ropes (7A, 7B) at the hill slope (B).

## Revendications

1. Structure de protection contre les chutes de pierres (1) destinée à être installée entre un côté montagne (BS) et un côté vallée (TS) d'un versant de montagne (B),
- avec au moins deux dispositifs de guidage (2A, 2B) pour un filet (3), qui présente un bord supérieur (4) et un bord inférieur (5), et
- avec un câble de support supérieur (6), qui guide le bord supérieur (4) du filet (3) sur les dispositifs de guidage (2A, 2B),
- dans laquelle au moins un câble central (7A) est prévu, lequel s'étend depuis un point d'extrémité supérieur (8A) fixé sur le câble de support supérieur (6) jusqu'à un point d'extrémité inférieur (9A) pouvant être fixé sur le versant de montagne (B), **caractérisée en ce**
- **que** l'au moins un câble central (7A) est pourvu d'un élément de freinage (10A) pouvant être fixé sur le versant de montagne (B), qui est disposé de manière adjacente au bord inférieur (5) du filet (3).

2. Installation de protection contre les chutes de pierres selon la revendication 1, **caractérisée en ce que** deux câbles centraux (7A, 7B) sont prévus, lesquels sont pourvus respectivement d'un élément de freinage (10A ou 10B) associé,
qui est disposé de manière adjacente par rapport au bord inférieur (5) du filet (3).

3. Installation de protection contre les chutes de pierres selon l'une quelconque des revendications 1 ou 2, **caractérisée en ce que** les au moins deux dispositifs de guidage (2A, 2B) sont réalisés en tant que montants disposés de manière adjacente l'un par rapport à l'autre.

4. Installation de protection contre les chutes de pierres selon l'une quelconque des revendications 1 à 3, **caractérisée en ce qu'**est fixé, sur un point de fixation (13A, 13B) du dispositif de guidage (2A, 2B) respectivement associé, un point d'extrémité supérieur (14A, 14B) d'un câble de support (12A, 12B) associé, qui s'étend depuis le point d'extrémité supérieur (14A, 14B) jusqu'à un point d'extrémité inférieur (15A, 15B) pouvant être fixé sur le versant de montagne (B), et que des éléments de freinage (16A, 16B) associés sont prévus, lesquels sont disposés respectivement de manière adjacente par rapport au bord inférieur (5) du filet (3).

5. Installation de protection contre les chutes de pierres selon l'une quelconque des revendications 1 à 4, **caractérisée en ce que** les dispositifs de guidage (2A, 2B) peuvent être fixés sur le versant de montagne (B) par des câbles de retenue (18A, 18A' ; 18B, 18B') côté montagne s'engageant sur les points de fixation (13A, 13B) respectifs.

6. Installation de protection contre les chutes de pierres selon l'une quelconque des revendications 1 à 5, **caractérisée en ce que** les dispositifs de guidage les plus extérieurs (2A, 2E) du filet (3) peuvent être fixés sur le versant de montagne (B) par un haubanage de câble (19A, 19E) s'engageant sur le point de fixation (13A, 13E) respectif.

7. Installation de protection contre les chutes de pierres selon l'une quelconque des revendications 1 à 6, **caractérisée en ce que** le point d'extrémité supérieur (8A, 8B) des câbles centraux (7A, 7B) est installé sur le câble de support supérieur (6) par l'intermédiaire d'un raccord de câble (22A ou 22B).

8. Installation de protection contre les chutes de pierres selon la revendication 7, **caractérisée en ce que** les raccords de câble (22A, 22B) sont réalisés en tant que raccords en forme de T.

9. Installation de protection contre les chutes de pierres selon la revendication 7 ou 8, **caractérisée en ce que** les raccords de câble (22A, 22B) sont réalisés en tant que composants mobiles.

10. Installation de protection contre les chutes de pierres selon l'une quelconque des revendications 1 à 9, **caractérisée en ce que** le bord inférieur (5) du filet (3) est guidé par un câble de bord de filet inférieur (28).

11. Installation de protection contre les chutes de pierres selon la revendication 10, **caractérisée en ce que** le câble de bord de filet inférieur (28) s'étend au moins de manière approximativement parallèle par rapport au câble de support supérieur (6) dans la zone du filet (3).

12. Installation de protection contre les chutes de pierres selon la revendication 10 ou 11, **caractérisée en ce que** le câble de bord de filet inférieur (28) peut être fixé sur le versant de montagne (B) par l'intermédiaire d'au moins un élément de freinage (24, 25) et sur chaque extrémité de câble par l'intermédiaire d'un ancrage latéral (26, 27) associé.

13. Installation de protection contre les chutes de pierres selon l'une quelconque des revendications 10 à 12, **caractérisée en ce qu'**un câble de support inférieur (23) s'étend sur une distance (A) de manière espacée par rapport au câble de bord de filet (28), ou que le câble central ou les câbles centraux (7A, 7B) sont guidés sur le câble de support inférieur (23) par l'intermédiaire d'éléments de guidage de câble (33, 34).

14. Installation de protection contre les chutes de pierres selon l'une quelconque des revendications 1 à 3, **caractérisée en ce que** respectivement un ancrage (11A, 11B) est prévu pour la fixation du câble central (7A) ou des câbles centraux (7A, 7B) sur le versant de montagne (B).
